**Europäisches Patentamt**

**European Patent Office**

**Office européen des brevets**

(19)

(11) Veröffentlichungsnummer: **0 206 268 B1**

(12) **EUROPÄISCHE PATENTSCHRIFT**

(45) Veröffentlichungstag der Patentschrift:
30.03.88

(51) Int. Cl.⁴: **B 29 C 53/82**, B 29 D 23/00 //
B29K105/10, B29L23/22

(21) Anmeldenummer: **86108393.9**

(22) Anmeldetag: **19.06.86**

(54) **Wickeldorn zum Herstellen von Rohrkörpern aus harzgetränkten Fasersträngen.**

(30) Priorität: **21.06.85 DE 3522233**

(43) Veröffentlichungstag der Anmeldung:
**30.12.86 Patentblatt 86/52**

(45) Bekanntmachung des Hinweises auf die Patenterteilung:
**30.03.88 Patentblatt 88/13**

(84) Benannte Vertragsstaaten:
**AT BE CH DE FR GB IT LI NL SE**

(56) Entgegenhaltungen:
**DE - A - 2 155 879**
**US - A - 3 677 684**
**US - A - 4 412 802**

(73) Patentinhaber: **BASF Aktiengesellschaft,
Carl-Bosch-Strasse 38, D-6700 Ludwigshafen (DE)**

(72) Erfinder: **Minor, Roman, Scheffelstrasse 4,
D-6711 Laumersheim (DE)**

## Beschreibung

Die Erfindung bezieht sich auf einen Wickeldorn nach dem Oberbegriff des Anspruchs 1.

Bei der Darstellung der Erfindung ist von einem Wickeldorn im Sinne der DE-C-2 652 862 oder DE-C-1 779 451 ausgegangen worden. Danach ist es bekannt, Rohrkörper aus Faserverbundwerkstoffen herzustellen, bei denen getränkte Rovings bandförmig als Rechts- und Linksschraube auf einen Dorn aufgewickelt, eventuell verpresst und anschliessend ausgehärtet werden. Diese Dorne sind jedoch nur für das Wickeln von Rohrkörpern mit einem Durchmesser von mehr als 300 mm geeignet. Sie bestehen aus einem dünnen Blechmantel, der eine in Achsrichtung sich erstreckende Trennfuge und eine zentrale Achse aufweist. Der Blechmantel wird durch ein Gestänge, das um die zentrale Achse angeordnet ist, gespannt bzw. nach innen geklappt und damit der Durchmesser für das Entformen der Rohrkörper verkleinert.

Für kleine Durchmesser, d.h. für Durchmesser < 300 mm stehen derartige Dorne nicht zur Verfügung. Solche Rohrkörper müssen von Hand mit Hilfe einer Abziehvorrichtung entformt werden. Dabei kommt es jedoch häufig zu Verformungen und Verwerfungen, insbesondere an den Rohrkörperenden. Darüber hinaus ist diese Arbeitsweise sehr zeitaufwendig und unwirtschaftlich, insbesondere dann, wenn Rohrkörper in grosser Stückzahl gefertigt werden sollen. Eine Automatisierung des Fertigungsablaufs ist, wenn überhaupt, nur schwer durchführbar, da der Dorn jedesmal aus der Wickelmaschine ausgebaut werden muss.

Mit der Erfindung soll ein Wickeldorn zum Herstellen von Rohrkörpern aus harzgetränkten Fasersträngen, insbesondere zum Herstellen von Rohrkörpern kleiner Innendurchmesser geschaffen werden, der von den geschilderten Nachteilen frei ist und zudem eine maschinelle Fertigung zylindrischer Rohrkörper mit reproduzierbaren Eigenschaften erlaubt.

Zur Lösung dieser Aufgabe werden die im Kennzeichen des Anspruchs 1 angegebenen Merkmale vorgeschlagen.

Gemäss der Erfindung besitzt der Wickeldorn demnach eine Dornhülse, die aus paarweise diametral gegenüberliegenden Schalensegmenten aufgebaut ist. Die Schalensegmente ergänzen sich zu einem zylindrischen Körper, wobei jeweils gegenüberliegende Schalensegmente baugleich ausgeführt sind. In den Schalensegmenten sind keilförmig verlaufende Nuten vorgesehen. Ein Schalensegmentpaar enthält zusätzlich parallele Nuten. In den Nuten sind durch Stege mit einem zentralen Kern verbundene Nutensteine eingesetzt. Die Anordnung der Nutensteine auf dem zentralen Kern richtet sich nach der Länge der Nuten bzw. nach dem Abstand zwischen den keilförmig und parallel verlaufenden Nuten in den Schalensegmenten. Durch eine axiale Relativbewegung zwischen dem zentralen Kern und der Dornhülse werden die Schalensegmente in einer Richtung senkrecht zum Kern bewegt, d.h. der Durchmesser der Dornhülse wird verkleinert bzw. vergrössert. Dies geschieht in zwei Stufen.

Für das Entformen eines Rohrkörpers werden zunächst die Schalensegmente, die nur keilförmig verlaufende Nuten aufweisen, so lange radial in Richtung auf den Kern bewegt, bis sie die Bewegung der anderen Schalensegmente nicht mehr behindern, und anschliessend bewegen sich alle Schalensegmente auf den zentralen Kern zu, bis die Entformstellung erreicht ist. Das Vergrössern der Dornhülse auf die Wickelstellung erfolgt in umgekehrter Reihenfolge. Auf diese Weise ist es möglich, Rohrkörper aus harzgetränkten Fasersträngen zu entformen, ohne dass hierfür der Wickeldorn demontiert werden muss. Es können auch Rohrkörper mit über ihre Länge konstantem Querschnitt hergestellt und entformt werden, da auf eine Entformungsschräge bei der Dornhülse verzichtet werden kann. Ausserdem lassen sich in die Rohrkörper besonders leicht Anbindungselemente integrieren. Eine durch die Wanddicke der Anbindungselemente bedingte Harzanreicherung im Übergangsbereich tritt dabei nicht auf. Der erfindungsgemässe Wickeldorn gestattet es, Rohrkörper in grossen Stückzahlen in einfacher Weise reproduzierbar maschinell herzustellen. Besonders vorteilhaft können kleinbauende Rohrkörper, wie Spindeln, Antriebswellen, Teleskoprohre usw. hergestellt werden. Die Länge dieser Rohrkörper ist in weiten Grenzen variierbar.

Zweckmässige Weiterbildungen des erfindungsgemässen Wickeldorns gehen aus den Unteransprüchen hervor.

Die Erfindung wird nachfolgend unter Hinweis auf die Zeichnungen anhand eines Ausführungsbeispiels näher erläutert.

Es zeigt

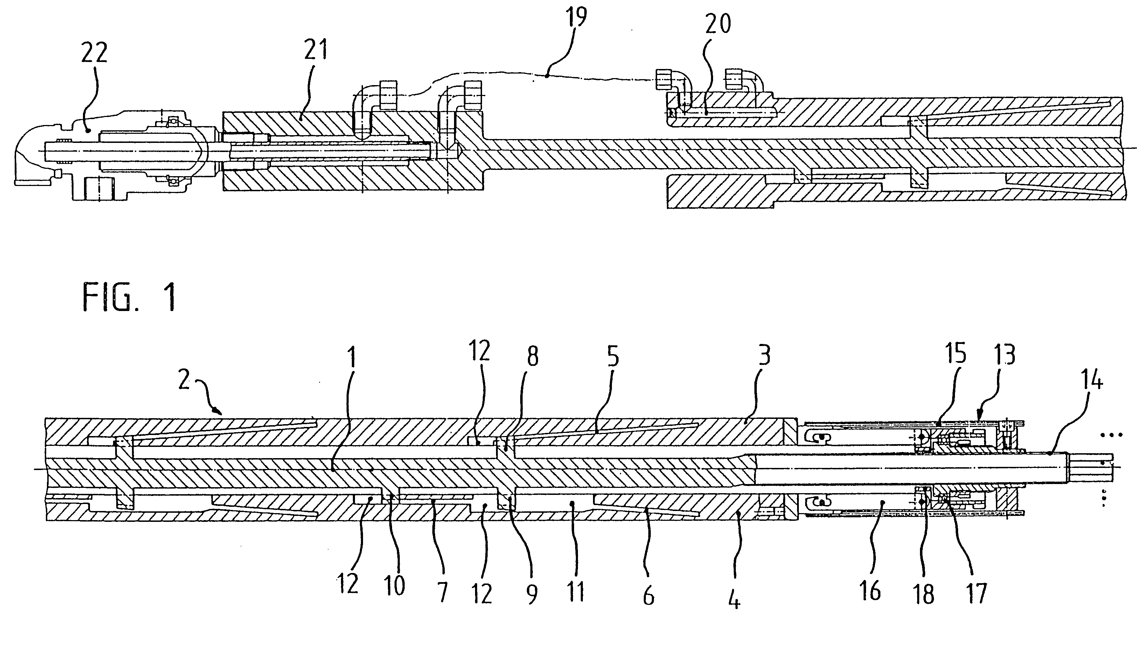

Figur 1 einen Wickeldorn im Längsschnitt, wobei die Schnittebene um 90° versetzt ist,

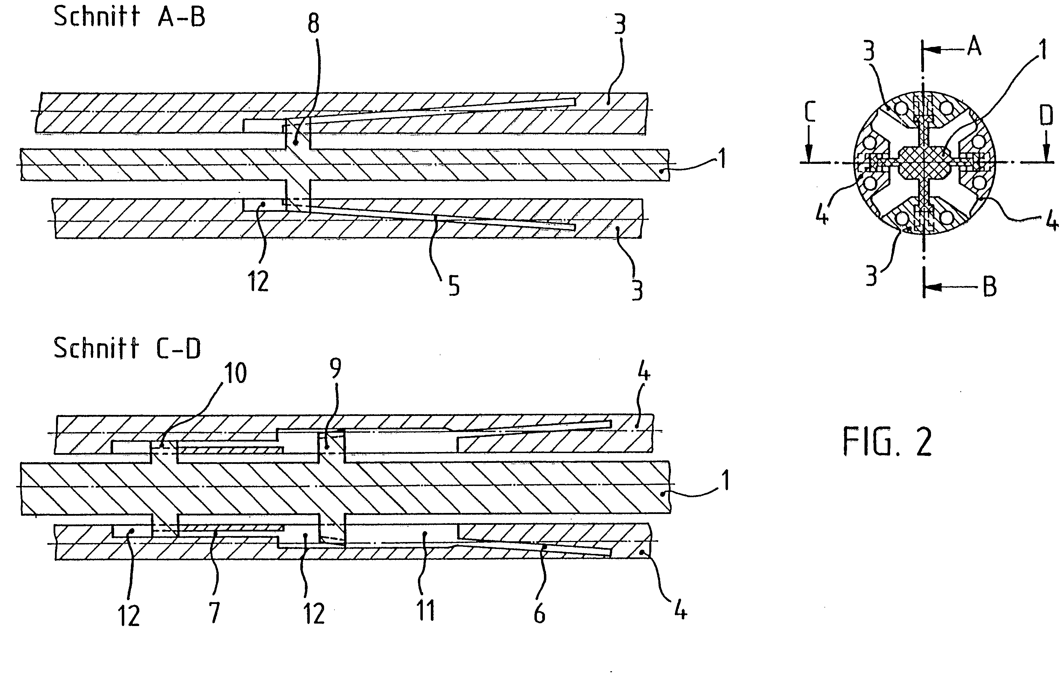

Figur 2 Teilansichten des Wickeldorns gemäss Figur 1 in der Wickelstellung,

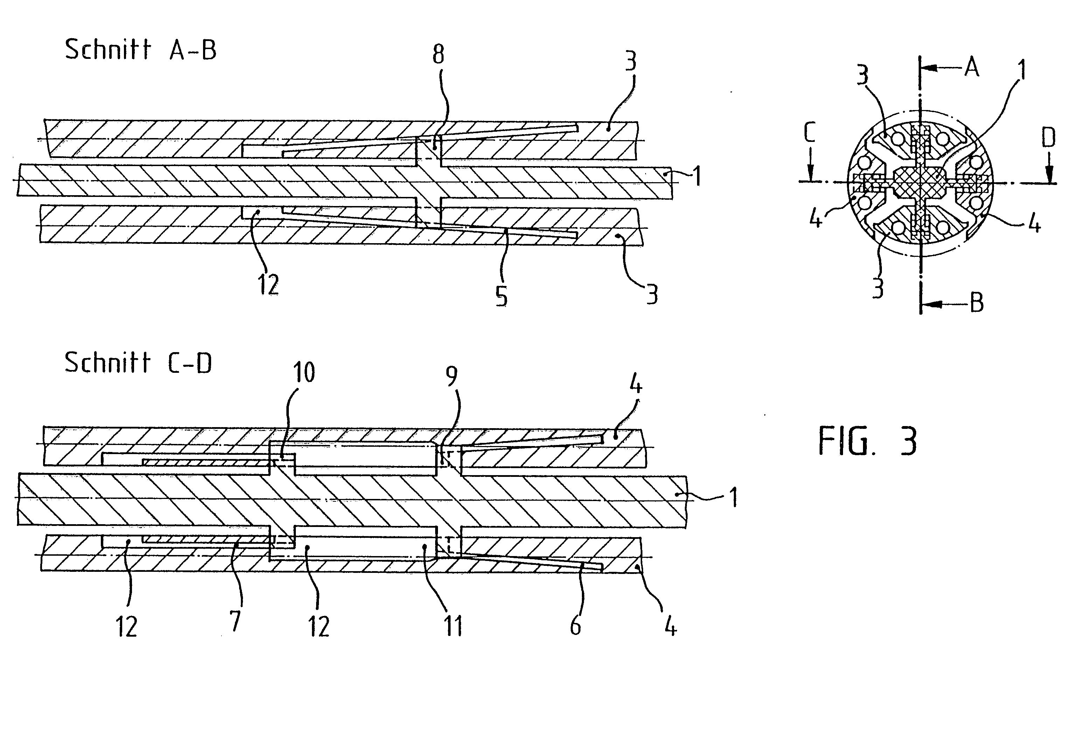

Figur 3 Teilansichten des Wickeldorns gemäss Figur 1 in einer Zwischenstellung, und

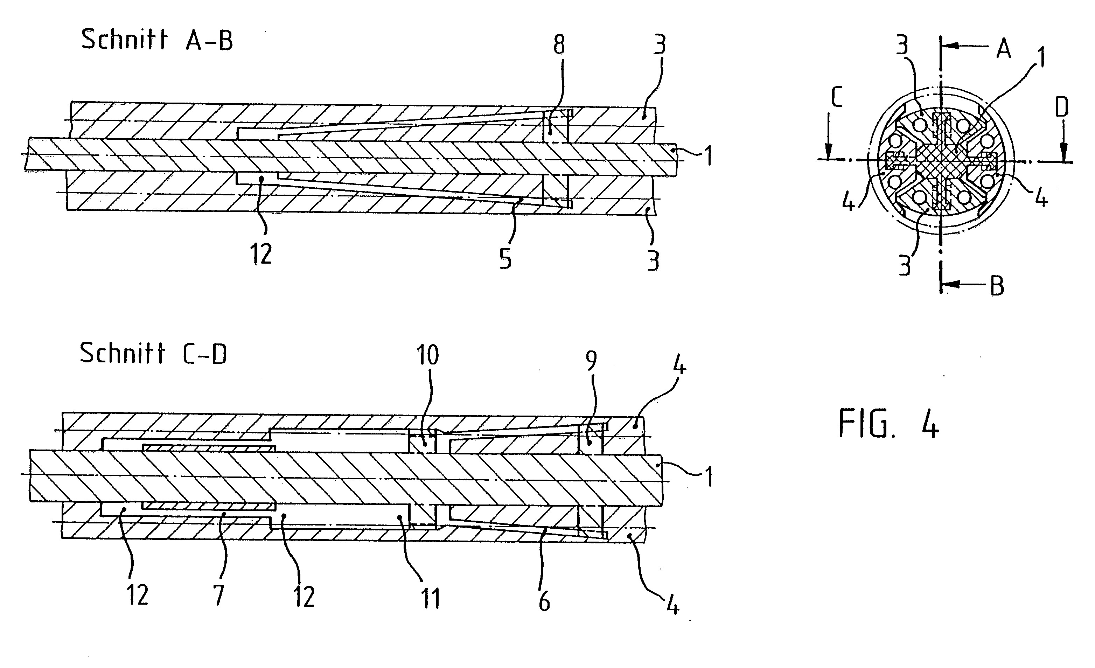

Figur 4 Teilansichten des Wickeldorns gemäss Figur 1 in der Entformstellung.

Im wesentlichen besteht der Wickeldorn aus einem zentralen Kern (1) und einer auf dem Kern hin- und herbewegbaren Dornhülse (2). Die Dornhülse enthält vier jeweils paarweise baugleiche und diametral gegenüberliegende Schalensegmente (3) und (4), von denen die Schalensegmente (3) zwei in einer Ebene keilförmig verlaufende Nuten (5) und die Schalensegmente (4) in einer Ebene keilförmig und parallel verlaufenden Nuten (6) und (7) auf der inneren Mantelfläche aufweisen. Vorzugsweise sind die Nuten im Querschnitt T-förmig ausgebildet. Die Neigung ist für sämtliche keilförmig verlaufenden Nuten gleich.

Die Schalensegmente bilden zusammen in der Wickelstellung einen Kreiszylinder. In ihrer Kontur nach innen sind sie dem Kern und den jeweils benachbarten Segmenten angepasst.

Der Kern (1) kann sowohl einseitig als auch an beiden Seiten gelagert sein. Er besitzt eine den Nuten in den Schalensegmenten entsprechende Anzahl Nutensteine (8, 9, 10), die jeweils paarweise auf gegenüberliegenden Kernflächen vorgesehen sind.

In der Wickelstellung stehen die Nutensteine (8) mit den Nuten (5) der Schalensegmente (3) und die Nutensteine (10) mit den Nuten (7) der Schalensegmente (4) im Eingriff. Die Nutensteine (9) befinden sich in den Freischnitten (11). Die Nuten (7) entsprechen in ihrer Länge der Strecke, die die Nutensteine (8) in den Nuten (5) zurücklegen müssen, damit die Schalensegmente (3) die Bewegung der Schalensegmente (4) nicht mehr behindern. In dieser Zwischenstellung haben in den Schalensegmenten (4) die Nutensteine (9) in die Nuten (6) eingegriffen und die Nutensteine (10) die parallel verlaufenden Nuten (7) verlassen. Die Länge der Nuten (6) entspricht der restlichen Strecke, die die Nutensteine (8) in den Nuten (5) der Schalensegmente (3) noch bewegt werden müssen, bis die Entformstellung erreicht ist.

Sämtliche Nuten (5, 6, 7) haben über die Wickelstellung hinaus einen Nutenfreischnitt (12). Werden die Schalensegmente (3) und (4) über die Wickelstellung hinaus verschoben, so dass sich die Nutensteine (8, 9, 10) in dem jeweiligen Nutenfreischnitt befinden, dann können die Schalensegmente von dem Kern (1) abgehoben werden.

Die axiale Bewegung der Dornhülse (2) auf dem Kern (1), die mit Hilfe der Nuten und Nutensteine in eine Bewegung der Schalensegmente (3) und (4) in einer Richtung senkrecht zum Kern umgesetzt wird, erfolgt durch eine sich an der Dornhülse und dem zentralen Kern abstützende Einrichtung (13). Diese Einrichtung ist hydraulisch, elektrisch oder, wie im dargestellten Ausführungsbeispiel gezeigt, mechanisch betätigbar. Dazu ist an einem Ende des Wickeldorns auf dem Kern (1) ein Gewinde (14) angebracht. Über ein Griffstück (15), das die gesamte Verstellmechanik überdeckt, wird die Einrichtung (13) um das Gewinde (14) bewegt. Die dabei hervorgerufene Längsbewegung der Einrichtung (13) wird über ein Kugellager (17) an ein ringförmiges Zugdruckelement (18), welches über vier Hebel (16) auf die Schalensegmente (3) und (4) wirkt, weitergegeben. Es werden somit die Schalensegmente in axialer Richtung verschoben und praktisch gleichzeitig eine Bewegung senkrecht zum Kern ausgelöst. Dies erfolgt in zwei Stufen. Für die Bewegung aus der Wickelstellung in die Entformstellung werden in der ersten Stufe zunächst die Schalensegmente (3) in Richtung auf den Kern (1) verschoben, bis die Bewegung der Schalensegmente (4) freigegeben ist. In der zweiten Stufe bewegen sich dann alle Schalensegmente gemeinsam auf den Kern zu, bis die Entformstellung erreicht ist. Eine Umkehrung der Axialbewegung der Einrichtung (13) führt wieder zur ursprünglichen Wickelstellung.

Nach einem weiteren Merkmal der Erfindung ist der Wickeldorn heizbar. Dies kann sowohl elektrisch über Heizpatronen und eine Schleifringkupplung als auch durch ein flüssiges Wärmeträgermedium geschehen. Für das Beheizen des Wickeldorns mit einem flüssigen Wärmeträger sind in den Schalensegmenten (3) und (4) Kanäle (20) eingebracht. Jedes Schalensegment enthält zwei Kanäle, für den Vorlauf und für den Rücklauf des Wärmeträgermediums. Ausserdem weist der Kern (1) eine Erweiterung (21) auf, an der eine handelsübliche Drehdichtung (22) angeschlossen ist. Das Wärmeträgermedium gelangt durch Verteilerkanäle und insgesamt acht flexible Schläuche (19) in die Kanäle (20).

Weiterhin kann die äussere Mantelfläche der Dornhülse für die Herstellung rohrförmiger Sonderbauteile Strukturen, Vertiefungen, (Gewinde-) Nuten und dergleichen aufweisen. Der Wickeldorn nach der Erfindung ist somit in vielfältiger Weise einsetzbar und ermöglicht insgesamt eine rationelle und wirtschaftliche Fertigung von Rohrkörpern aus harzgetränkten Fasersträngen.

## Patentansprüche

1. Wickeldorn zum Herstellen von Rohrkörpern aus harzgetränkten Fasersträngen, insbesondere zum Herstellen von Rohrkörpern kleiner Durchmesser, mit einem zentralen Kern und einer in ihrem Durchmesser veränderbaren Dornhülse, *dadurch gekennzeichnet*, dass die Dornhülse (2) aus paarweise baugleichen und diametral gegenüberliegenden Schalensegmenten (3) und (4) besteht und auf dem zentralen Kern (1) hin- und herbewegbar ist, wobei die Schalensegmente (3) keilförmig und die Schalensegmente (4) keilförmig und parallel verlaufende Nuten (5) bzw. (6) und (7) auf der inneren Mantelfläche aufweisen und in den Nuten (5, 6, 7) auf dem zentralen Kern (1) entsprechend angeordnete Nutensteine (8, 9, 10) geführt sind, derart, dass die Schalensegmente (3) und (4) in zwei Stufen in einer Richtung senkrecht zum Kern (1) verschiebbar sind.

2. Wickeldorn nach Anspruch 1, *dadurch gekennzeichnet*, dass die Bewegung der Dornhülse (2) durch eine sich an der Dornhülse und dem zentralen Kern (1) abstützende Einrichtung (13) erfolgt.

3. Wickeldorn nach den Ansprüchen 1 und 2, *dadurch gekennzeichnet*, dass die Einrichtung (13) mechanisch, elektrisch oder hydraulisch betätigbar ist.

4. Wickeldorn nach den Ansprüchen 1 bis 3, *dadurch gekennzeichnet*, dass die Dornhülse (2) heizbar ist.

5. Wickeldorn nach den Ansprüchen 1 bis 4, *dadurch gekennzeichnet*, dass die Dornhülse (2) auf ihrer äusseren Mantelfläche Strukturen, Vertiefungen, (Gewinde-)Nuten und dergleichen aufweist.

## Claims

1. A winding mandrel for producing tubular articles from resin-impregnated fiber strands, in particular for producing tubular articles of small diameter, comprising a central core and a mandrel sheath of variable diameter, wherein the mandrel sheath (2) consists of pairs of diametrically opposite shell segments (3) and (4) of identical construction and is movable forward and backward on the central core (1), the shell segments (3) and (4) having on the inner peripheral surface in the former case grooves (5) which extend in a wedge shape and in the latter case grooves (6) and (7) which extend in a wedge shape and in parallel, and appropriately arranged groove blocks (8, 9, 10) being guided in the grooves (5, 6, 7) on the central core (1) in such a way that the shell segments (3) and (4) are movable in a direction perpendicular to the core (1) in two stages.

2. A winding mandrel as claimed in claim 1, wherein the movement of the mandrel sheath (2) is effected by means of a device (13) supported on the mandrel sheath and the central core (1).

3. A winding mandrel as claimed in claim 1 or 2, wherein the device (13) is mechanically, electrically or hydraulically actuable.

4. A winding mandrel as claimed in any of claims 1 to 3, wherein the mandrel sheath (2) is heatable.

5. A winding mandrel as claimed in any of claims 1 to 4, wherein the mandrel sheath (2) has textures, depressions, (thread) grooves and the like on its outer peripheral surface.

## Revendications

1. Broche de bobinage pour la fabrication de corps creux en écheveaux de fibres imprégnés de résine, en particulier pour la fabrication de corps creux de petits diamètres, comportant un noyau central et un manchon de diamètre variable, caractérisée par le fait que le manchon de broche (2) est constitué de segments de coques (3) et (4) deux à deux diamétralement opposées et de même structure et est déplaçable en va-et-vient sur le noyau central (1), les segments de coques (3) présentant, sur leur face enveloppe intérieure, des rainures (5) inclinées en forme de coin et les segments de coques (4) des rainures inclinées en forme de coin (6) et parallèles (7), et des coulisseaux (8, 9, 10) disposés de façon correspondante sur le noyau central (1) étant guidés dans ces rainures (5, 6, 7) de telle sorte que les segments de coques (3) ou (4) sont déplaçables, en deux étapes, dans une direction perpendiculaire au noyau (1).

2. Broche de bobinage selon la revendication 1, caractérisée par le fait que le mouvement du manchon de broche (2) est produit par un dispositif (13) prenant appui sur le manchon et sur le noyau central (1).

3. Broche selon les revendications 1 et 2, caractérisée par le fait que le dispositif (13) est actionnable mécaniquement, électriquement ou hydrauliquement.

4. Broche selon les revendications 1 à 3, caractérisée par le fait que le manchon de broche (2) est chauffable.

5. Broche selon les revendications 1 à 4, caractérisée par le fait que le manchon de broche (2) possède, sur sa face enveloppe extérieure, des structures, des creux, des rainures (filetées) ou analogues.

FIG. 1

Schnitt A-B

Schnitt C-D

FIG. 2

0 206 268

Schnitt A-B

Schnitt C-D

FIG. 3

0 206 268

Schnitt A–B

Schnitt C–D

FIG. 4

0 206 268